Europäisches Patentamt

European Patent Office

Office européen des brevets

(11) Veröffentlichungsnummer: **0 360 892**
**A1**

# (12) EUROPÄISCHE PATENTANMELDUNG

(21) Anmeldenummer: **88115906.5**

(22) Anmeldetag: **27.09.88**

(51) Int. Cl.5: **G01W 1/14**

(43) Veröffentlichungstag der Anmeldung:
**04.04.90 Patentblatt 90/14**

(84) Benannte Vertragsstaaten:
**CH DE FR GB LI NL SE**

(71) Anmelder: **Genrich, Volker, Dipl.-Chem.**
**Heerstrasse 149**
**D-6000 Frankfurt am Main 90(DE)**

(72) Erfinder: **Genrich, Volker, Dipl.-Chem.**
**Heerstrasse 149**
**D-6000 Frankfurt am Main 90(DE)**

(54) **Elektronischer Sensor zur Messung der Regenmenge durch Bewertung der Prallfläche einzelner Tropfen.**

(57) Die Erfindung bezieht sich auf einen elektronischen Sensor zur verzögerungsfreien Erkennung und Bewertung von Regen-Ereignissen. Es werden gleichzeitig eine Regenmeldung (Tropfen Ja Nein), die integrale Niederschlagshöhe (Millimeter Wassersäule) sowie die Volumina (Mikroliter) der einzelnen Regentropfen zur Verfügung gestellt (Spektrum).

Der Sensor arbeitet mit Hilfe einer Meßfläche 2, die direkt dem Regen ausgesetzt ist. Die Regentropfen 1 fallen unmittelbar auf diese Fläche und erzeugen dort beim Aufprall eine deutlich abgegrenzte Prallfläche 3. Die Meßfläche ist als ein großflächiger Kondensator ausgebildet. Aufgrund der Bauart des Kondensators erzeugen die hydrodynamischen Vorgänge beim Auf- und Abbau der Prallfläche 3 kurzfristig eine Kapazitätsveränderung ΔC.

Erfindungsgemäß wird aus den ΔC-Sprüngen mit positivem Vorzeichen ein Parameter gewonnen, der mit dem zugehörigen Tropfenvolumen korreliert ist. Die Exaktheit der Transformation in das jeweilige Tropfenvolumen basiert einerseits auf einer Kombination von unterschiedlich ausgelegten Teilbereichen (Zonen) auf der Meßfläche 2 und andererseits auf der erfindungsgemäßen Sonderbeschaltung eines Phasenregelkreises (Phase-Locked Loop, PLL).

FIGUR 1

# ELEKTRONISCHER SENSOR ZUR MESSUNG DER REGENMENGE DURCH BEWERTUNG DER PRALLFLÄCHE EINZELNER TROPFEN

Die Erfindung bezieht sich auf einen elektronischen Sensor zur verzögerungsfreien Erkennung und Bewertung von Regen-Ereignissen. Als Ergebnis werden dabei gleichzeitig eine Regenmeldung (Tropfen Ja/Nein), die integrale Niederschlagshöhe (Millimeter Wassersäule) sowie die Volumina (Mikroliter) der einzelnen Regentropfen zur Verfügung gestellt. Mit Hilfe dieser Daten kann ein Regen-Ereignis auch in seiner Tropfengrößen-Verteilung charakterisiert werden (Spektrum). Das neuartige Meßprinzip ermöglicht wartungsfreien Dauerbetrieb der Meßköpfe im Freien.

Herkömmliche Regenmesser sammeln die Regentropfen in einem speziell geformten Trichter (Hellmann-Trichter). Eine Konstruktion dieser Art (mit einer Auffangfläche von 200 cm²) wurde bereits im Jahre 1966 mit einer Normung (DIN 58 666). Die ausfließende Wassermenge wird nach unterschiedlichen Methoden bestimmt. Im einfachsten Fall wird das Wasser in einem Sammelgefäß aufgefangen; es muß dann in regelmäßigen Abständen manuell in einen Meßzylinder überführt und abgelesen werden (DIN 58 667).

Als Weiterentwicklung sind Geräte bekannt, die die Wassermenge im Sammelgefäß automatisch ermitteln. Sie arbeiten mit Hilfe eines mechanischen Schwimmers oder mit Hilfe einer Waage (DER 77). Auch die elektronische Füllstandsmessung mit optischen, akustischen oder kapazitiven (SCH 77) Verfahren ist bekannt.

In automatisierten meteorologischen Beobachtungsstationen ist es heute Stand der Technik, die ausfließende Wassermenge mit einer relativ einfachen, elektromechanischen Wippvorrichtung zu ermitteln, die im Wesentlichen auf amerikanische Patentschriften zurückgeht (KAH 72, BAE 74). Zwei gleichgroße Meßgefäße sind dicht nebeneinander auf einer speziellen Kontaktwippe angebracht. Die Wippe ist so aufgebaut, daß das zunächst stabile Gleichgewicht mit steigender Füllhöhe labil wird. Beim Erreichen einer bestimmten Füllung löst dann das schwerere Gefäß rein mechanisch einen Kippvorgang aus. Beim Kippen entleert es sich und bringt zugleich das jeweils andere Gefäß unter den Auslauf. Dadurch wird der Wasserfluß wechselweise in das Paar von Meßgefäßen aufgeteilt und dabei zugleich quantisiert. Jeder Kippvorgang wird über einen Reedkontakt o. dgl. elektrisch gemeldet.

Alle bisher genannten Konstruktionen zeigen bei Dauerbetrieb im Freien eine Reihe von gravierenden Nachteilen:

A) Benetzungsfehler: Bei einsetzendem Regen muß zunächst die gesamte Oberfläche des Auffangtrichters mit Regenwasser benetzt sein, bevor der erste Tropfen zur Auswertung gelangen kann. Durch diese Benetzung entstehen regelmäßig Wasserverluste. Bei der isolierten Auswertung kurzfristiger Regenereignisse führen diese Verluste zu erheblicher Unterbewertung.

B) Verdunstungsfehler: Unabhängig von den erwähnten Benetzungsverlusten entsteht ein permanenter Wasserverlust durch Verdunstung. Auch diese Fehlerquelle kann bei schwachem Regen erheblich sein.

C) Zeitfehler: Wegen der Benetzung entsteht die Information über den Beginn eines Regenereignisses immer mit einer mehr oder minder großen Zeitverzögerung. Diese ist bei vielen Anwendungen unerwünscht. Beispielsweise dort, wo die Regen-Information zeitgleich mit Analysenwerten aus der Luftüberwachung (Staub, $SO_x$, $NO_x$, Radioaktivität etc.) aufgezeichnet wird, um Auswaschungs-Effekte zu erkennen. Besonders kritisch ist die Zeitverzögerung bei der Erzeugung von Warn-Hinweisen bezüglich des Zustands von Landebahnen, Autoschnellstraßen etc.

D) Linearitätsfehler: Bei starkem Regen kippt die Wippe zu früh. Dies hängt zum Teil mit der kinetischen Energie des auslaufenden Wasserstrahls zusammen. Die Wippe erzeugt dann in diesen Perioden eine Falschbewertung, die allein mit 3 bis 4 % beziffert wird (NEL 83).

E) Geringe Auflösung: Mit einem Fassungsvermögen von ca. 10 ml erzeugt eine Wippe herkömmlicher Bauart etwa fünf Kippvorgänge pro Millimeter Wassersäule. Mit einer solchen Auflösung lassen sich geringe Niederschlagsaktivitäten - die in regenarmen Gebieten der Erde von großen Bedeutung sein können - nur ungenau erfassen. F) Frendkörperprobleme: Dort, wo das Wasser vom Trichter in den relativ engen Auslaßstutzen geführt wird, besteht immer die Gefahr, daß entweder der düsenförmige Auslaß oder das vorgelagerte Sieb durch Flugsand, Blütenblätter, Samen, Vogelfedern etc. verstopft. Auch Störungen des Wippenmechanismus duch Insekten, sowie biologische Ablagerungen in den Meßgefäßen, können die Meßgenauigkeit beeinträchtigen. Ein sicherer Betrieb der herkömmlichen Regenmesser ist nur bei regelmäßiger (möglichst täglicher) Inspektion gewährleistet. Der Aufstellungsort muß daher frei zugänglich bleiben; eine Dach- oder Mastmontage scheidet praktisch aus.

G) Aufwendiger Frostschutz: Wenn die Niederschlagsmessung auch bei Minustemperaturen korrekt arbeiten soll, muß der gesamte Auffangtrichter per Thermostat über dem Gefrierpunkt gehalten werden. Bei der großen Fläche des Trichters müssen hierzu beträchtliche Heizleistungen bereitgehalten werden. Dies führt insbesondere bei batterie- oder solarbetriebenen Außenstationen zu erheblichen Versorgungsproblemen.

H) Erschütterungs- und Neigungsempfindlichkeit: Konstruktionsbedingt muß ein mit Wippe ausgestatteter Regenmesser immer erschütterungsfrei und genau waagrecht aufgestellt werden. Dies verhindert beispielsweise den Einsatz solcher Geräte auf Schiffen, Wetterbojen oder an mobilen Meßfahrzeugen (Katastrophenschutz). Auch der ortsfeste Betrieb an exponierter Stelle kann problematisch werden, wenn die Tragekonstruktion bei starkem Wind vibriert oder sonstige Bewegungen ausführt.

Zusammenfassend ergibt sich, daß von den bisher bekannten Regenmessern nur eine begrenzte Genauigkeit erwartet werden kann. Der Deutsche Wetterdienst beispielsweise benennt für seine Niederschlagsstationen systematisch bedingte Fehlerbeträge - je nach Jahreszeit - zwischen 16% und 40% für die langfristige Beobachtung (KEL 79). Bei kurzfristiger Beobachtung ist eine wesentlich höhere Fehlerbreite anzusetzen.

Niederschlagsmesser herkömmlicher Bauart sind auch noch sehr weit davon entfernt, dem Anforderungsprofil an eine moderne, EDV-kompatible Sensorik zu entsprechen (OEH 87, ZIE 87). Dies gilt insbesondere für den Aspekt der regelmäßigen Wartung, die den Aufbau großer, vollautomatischer Meßnetze erheblich behindert.

Einige der beschriebenen Schwachpunkte können durch Modifikationen und Ergänzungen aufgebessert werden. Eine wichtige Ergänzung zum Trichter/Wippe-Konzept wurde in den siebziger Jahren vom Deutschen Wetterdienst (Meteorologisches Observatorium Hohenpeißenberg) entwickelt und in der Praxis eingeführt: der sogenannte Tropfer, auch Ombrometer[R] genannt. Hier wird zwischen dem Auffangtrichter und der Wippe eine Lichtschranke eingefügt, die dann bereits im Vorlauf einzelne Tropfen erkennen und abzählen kann.

Als eine neuere Variante des zuletzt beschriebenen Verfahrens kann die Tropfenzählung mit Hilfe einer Gleichstrom-Leitwertmessung (an einer Draht-Matrix) angesehen werden (NEL 83). Mit beiden Varianten der Tropfenzählung kann zwar der unter E) genannte Nachteil vermieden werden, die Punkte D), F) und H) werden jedoch noch kritischer.

Dort, wo eine sehr schnelle Ja/Nein-Entscheidung in Bezug auf Regen notwendig ist, kann neben dem Trichter zusätzlich eine Meßfläche mit offenen Elektroden vorgesehen werden, die durch Leitfähigkeitsmessung o.ä. eine Benetzung mit Wasser meldet (JüL 81, HEI 82). Wenn solche Regenmelder tatsächlich so empfindlich ausgelegt werden, daß jeder einzelne Tropfen detektierbar ist, dann können sie auch sehr leicht durch anliegende Fremdkörper, Korrosion oder Mikoben-Bewuchs gestört werden (falsch-positives Dauersignal).

Die in der Fachwelt hinreichend bekannten Nachteile haben in der Vergangenheit auch dazu geführt, daß vielfältige Versuche unternommen worden sind, die Genauigkeit und die Zuverlässigkeit der Regenmessung durch die Anwendung vollkommen neuartiger Meßprinzipien zu verbessern.

Ein solcher Versuch ist die Wassermengenbestimmung durch Impedanzmessung an einem Füllkörper (WAL 85). Feldversuche mit der vorgeschlagenen Anordnung sind in der Literatur bisher nicht dokumentiert. Bei genauem Studium des Prinzips ist jedoch offenkundig, daß die Mehrzahl der oben unter A) bis H) genannten Schwachpunkte auch für diese Anordnung zutreffen muß.

Eine wirklich nennenswerte Verbesserung des Standes der Technik ist bisher nur mit extrem aufwendigen Methoden auf optischer Basis (Laser) oder mit Hilfe der Radartechnik gelungen. Solche (naturgemäß sehr kostspieligen) Großgeräte konnten nur vereinzelt in wissenschaftlichen Studien eingesetzt werden. Sie sind insbesondere keine in Stückzahlen einsetzbare Alternative für meteorogogische Meßnetze. Eine gute Übersicht über alle bisher bekannten Sonderverfahren ist in einer diesbezüglichen Patentschrift zu finden (HAN 86).

Mit Ausnahme der (hier nicht relevanten) Sonderverfahren verbleiben bei der Regenmessung nach dem Stand der Technik heute immer noch die Mehrzahl der oben unter A) bis H) aufgeführten Problembereiche. Aufgabe der hier beschriebenen Erfindung ist es, diese - meist systembedingten -Nachteile durch Anwendung eines neuartigen Meßverfahrens so weit wie Möglich zu umgehen. Der erfindungsgemäße Regenmesser soll sich insbesondere für den Einsatz in großen Stückzahlen (Meßnetze) eignen.

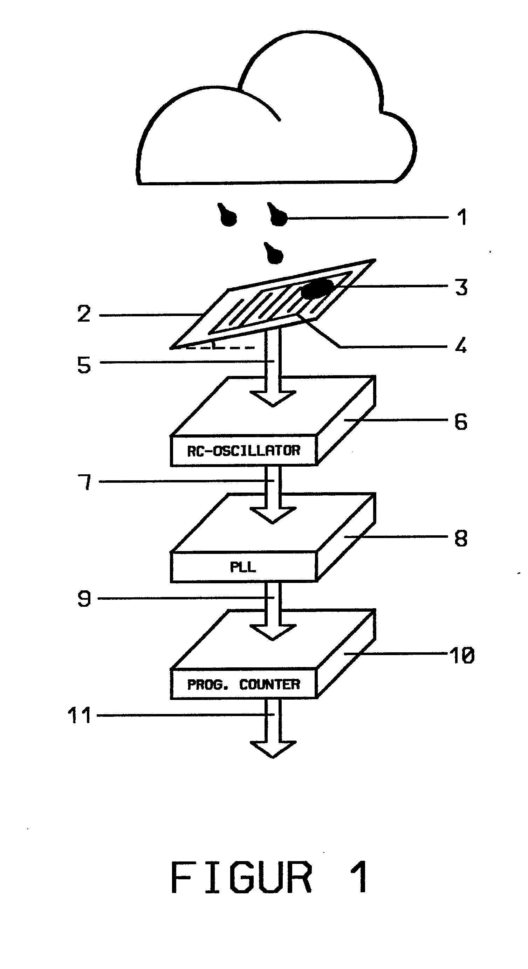

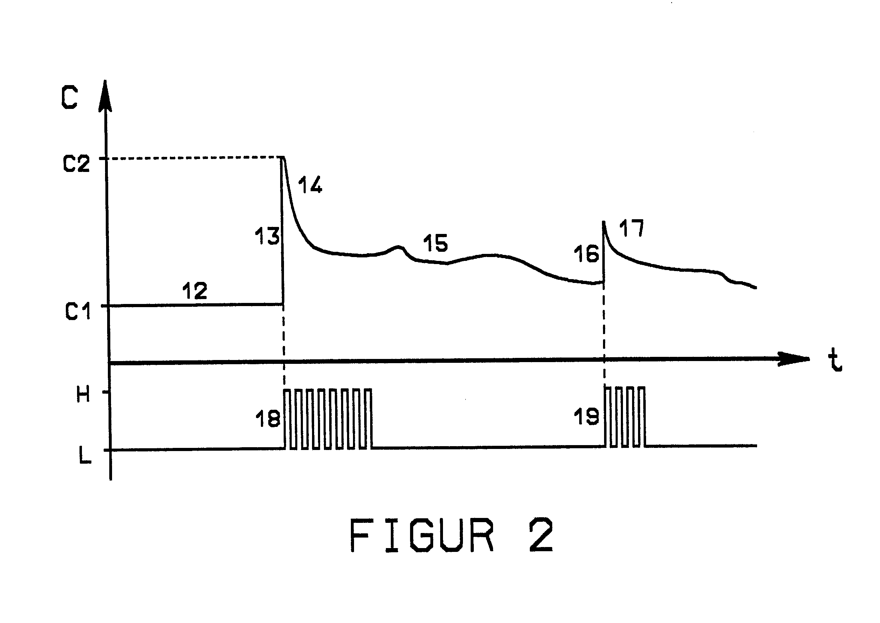

Zunächst soll anhand des Blockschemas von Figur 1 und des Signalverlaufs von Figur 2 eine Übersicht über das zugrundeliegende Prinzip des erfindungsgemäßen Regensensors gegeben werden: Der Sensor arbeitet mit Hilfe einer Meßfläche 2, die direkt dem Regen ausgesetzt ist. Die Regentropfen 1 fallen unmittelbar auf diese Fläche und erzeugen dort beim Aufprall (kurzfristig) einen deutlich abgegrenzten, runden Wasserfleck. Dieser Fleck soll im Folgenden als Prallfläche 3 bezeichnet werden. Das Areal der Prallfläche 3 ist hauptsächlich vom Volumen des Tropfens (und der zugehörigen Fallgeschwindigkeit) abhängig.

Die Meßfläche 2 ist als ein großflächiger Interdigital-Kondensator ausgebildet. Eine solche Bauart ist in der Dickschicht-Technologie vom Prinzip her zum Aufbau von Hochspannungs-Kondensatoren bekannt (REI 86). Eine typische Ausführungsform besteht z.B. darin, daß auf der Oberfläche eines geeigneten Trägermaterials zwei kammförmig oder spiralförmig ineinandergreifende Leiterstrukturen nebeneinander als Elektrodenpaar 4 aufgebracht sind.

Auf dem Elektrodenpaar 4 ist dann flächendekkend eine dünne, physikalisch und chemisch inerte Isolierschicht (Dielektrikum) angebracht. Eine direkte d.h. galvanische Restleitfähigkeit zwischen den flächenhaft ausgebreiteten Elektroden 4 des Meßkondensators und dem auf der Meßfläche 2 auftreffenden Wasser muß unter allen Umständen vermieden werden. Das Dielektrikum selbst darf auch keinerlei Wechselwirkung mit dem Wasser eingehen; es darf weder für Wasser noch für Wasserdampf durchlässig sein. Anhand der in diesem Abschnitt genannten Merkmale unterscheidet sich die erfindungsgemäße Konstruktion von der Gruppe ähnlich aufgebauter Feuchte-, Gas- und Chemosensoren. über rückseitige Durchführungen erhalten die Elektroden 4 einen elektrischen Anschluß 5 an die erste Stufe 6 der nachfolgenden Elektronik.

Zunächst sollen die hydrodynamischen Vorgänge während des Auftreffens eines Wassertropfens betrachtet und deren Auswirkung auf die Meßfläche beschrieben werden: Gemäß Figur 2 hat der Meßkondensator im Ausgangszustand einen Kapazitätswert C1, Bezugszeichen 12 . Wenn dann ein Wassertropfen auftrifft, so bewirkt die Wasserbedeckung auf der Prallfläche eine sprunghafte Erhöhung 13 der ursprünglich vorhandenen Kapazität auf den neuen Wert C2. Der bei diesem Vorgang enstehende Unterschied in der Kapazität sei $\Delta C$. Typische Werte für $\Delta C$ betragen etwa 10 fF für kleine und etwa 10 pF für extrem große Tropfen. Der in Figur 2 gezeigt Kapazitätsanstieg 13 läuft etwa innerhalb einer Millisekunde ab, der darauf folgende schnelle Abbau 14 typischerweise innerhalb von 10 bis 100 Millisekunden.

Mit Hilfe einer definierten Schrägstellung der Meßfläche 2 und verstärkt durch eine spezielle Oberflächenbehandlung wird nun dafür gesorgt, daß die in der Prallfläche 3 vorhandene Wassermenge innerhalb kurzer Zeit von den sensiblen Partien der meßfläche abläuft. Für die Dauer des Ablaufvorgangs stellt sich gewöhnlich für etwa 1000 Millisekunden ein Kapazitätsverlauf mit undefinierten Schwankungen 15 ein. die genannte Schrägstellung erschwert zugleich die Anhaftung von Fremdkörpern aller Art auf der Meßfläche 2. Es ist vorteilhaft, die Meßfläche 2 so in das Sensorgehäuse zu integrieren, daß jeglicher Schmutz an der Unterkante (Figur 1: links) frei abgleiten kann. Dies unterstützt den Selbstreinigungs-Effekt der Meßfläche.

Vom Prinzip her ist die Meßfläche 2 immer dann wieder zur Erfassung neuer Tropfen-Ereignisse 16, 17 bereit, wenn die schnelle Rücklaufphase 14 beendet ist, d.h. nach 10 bis 100 Millisekunden. Dadurch, daß die nachgeordnete Signalauswertung 6, 8, 10 in der Lage ist, ausschließlich auf sehr schnelle Erhöhungen der Kapazität ($\Delta C$-Sprünge mit positivem Vorzeichen) zu reagieren, ist es für die Genauigkeit der nächstfolgenden Tropfenbewertung 16, 17 unerheblich, ob das ursprüngliche Kapazitätsniveau 12 wieder erreicht worden ist oder nicht. Auch dauerhafte Niveauver schiebungen durch Temperaturdrift oder durch Anhaften kleinerer Fremdkörper auf der Meßfläche 2 (Verschmutzung), würden die Erkennung und korrekte Bewertung neuer Tropfen nicht behindern.

Erfindungsgemäß wird aus den $\Delta C$-Sprüngen mit positivem Vorzeichen ein Parameter gewonnen, der primär mit der Größe der Prallfläche und sekundär auch mit dem zugehörigen Tropfenvolumen korreliert ist. Die Transformation der einzelnen $\Delta C$-Ereignisse in das jeweilige Tropfenvolumen ist hier durch eine nicht-lineare, stochastische Zuordnung gegeben. Der mit der Nicht-Linearität zusammenhängende Bewertungsfehler wird einerseits durch eine besondere Geometrie der Elektroden 4 und andererseits durch eine spezielle Schaltungsanordnung bei der Signalauswertung in Einheit 8 kompensiert. Im Zusammenhang mit dem später beschriebenen Beispiel werden Details dieser Linearisierungstechnik offenbart.

Nach erfolgter Linearisierung kann jedem $\Delta C$-Sprung das korrekte Tropfenvolumen zugeordnet werden. Ein solches, auf einen einzelnen Tropfen bezogenes Volumen-Ergebnis soll als Tropfenvektor bezeichnet werden.

Wesentlich an dem erfindungsgemäßen Verfahren ist die Tatsache, daß die Dynamik des Primärsignals ausgewertet wird. Das der Erfindung zugrundeliegenden Prinzips kann daher im englischen Sprachgebrauch sehr treffend mit dem Begriff "Electronic Impact Sizing = ELIS" charakterisiert werden.

Als Nächstes soll die Arbeitsweise der erfindungsgemäßen Signalauswertung unter Bezug auf die in Figur 1 dargestellten Blöcke näher erläutert werden. Die Auswertung besteht im Wesentlichen aus drei aufeinanderfolgenden Einheiten 6, 8, 10 . Einheit 6 ist ein RC-Oszillator. Die Elektroden 4 des Meßkondensators bilden über den Anschluß 5 die Frequenzbestimmende Kapazität dieses Oszillators. An seinem Ausgang 7 steht als Signal eine Frequenz F zur Verfügung, die jeden positiven $\Delta C$-Sprung als negativen $\Delta F$-Sprung umsetzt. Faktisch werden der Oszillatorfrequenz alle $\Delta C$-Sprünge als äquivalente $\Delta F$-Sprünge aufgeprägt (Frequenzmodulation).

Die nachfolgende Einheit 8 kann von ihrer Funktion her als einseitig wirkender FM-Demodulator aufgefaßt werden. Er darf allerdings nur schnelle $\Delta F$-Sprünge von höheren nach tieferen Frequenzen mit einem Ausgangssignal beantworten; auf Sprünge in umgekehrter Richtung darf er nicht reagieren. Auch langsame Frequenzverschiebungen - gleichgültig in welcher Richtung - dürfen nicht ausgewertet werden, damit der in Figur 2, Bezugszeichen 15 dargestellte Verlauf ohne Einfluß auf die Genauigkeit der Niederschlagsmessung bleibt.

Besonders vorteilhaft für die weitere Aufbereitung des Signals ist die Ausgestaltung des FM-Demodulators 8 in den Techniken eines Phasenregelkreises, auch Nachlaufsychronisation genannt (engl.: Phase-Locked Loop, PLL). Die Grundschaltung dieser Technik ist bekannt (TIE 83), sie wird jedoch hier in einer Art und Weise eingesetzt, wie sie bisher - auch in einschlägigen Monografien (BES 87) - noch nicht erwähnt ist.

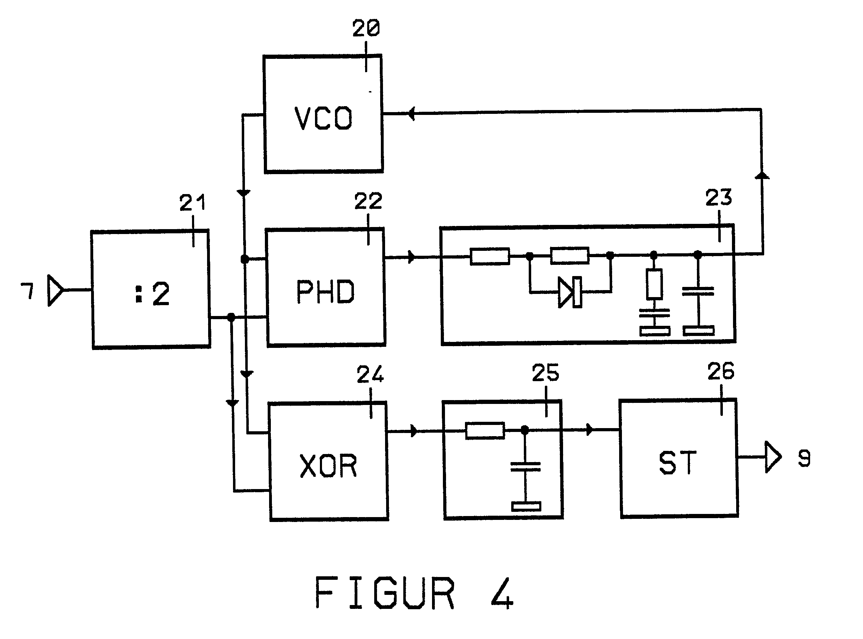

Innerhalb der erfindungsgemäßen Anordnung steht am Ausgang 9 des Phasenregelkreises - bei geeigneter Zusatzbeschaltung (vergl. Figur 4) - ein Signal zur Verfügung, das als Antwort auf jeden negativen ΔF-Sprung immer eine dem Frequenzhub proportionale Impulskette (engl.: Burst) erzeugt. Ein solches Ausgangsignal ist in Figur 2 mit der Zuordnung 13 zu 18 und 16 zu 19 in vereinfachter Form dargestellt.

Wesentlich für die Exaktheit der Umsetzung von ΔF-Sprüngen in die zugehörigen Tropfenvektoren ist hier, daß mit Hilfe der erfindungsgemäß erzeugten Krümmung in der Kennlinie des PLL-Demodulators auch die oben erwähnte Nicht-Linearität auskorrigiert wird. Erst nach dieser Korrekturmaßnahme kann die Anzahl der Flanken (18, 19) aus dem Phasenregelkreis direkt als Tropfenvektor ausgegeben werden. An dieser Stelle sei daran erinnert, daß die hier beschriebene, elektronische Korrekturmaßnahme in Verbindung mit den geometrischen Korrekturmaßnamen an der Meßfläche gesehen werden muß.

Durch Summation der zeitlich aufeinanderfolgenden Vektoren ergibt sich ein genaues Maß für die auf Meßfläche 2 auftreffende Wassermenge. In der letzten Stufe 10 werden daher die einlaufenden Tropfenvektoren in einem Zähler mit programmierbarem Teilerverhältnis aufaddiert. Darüber hinaus können die einzelnen Vektoren bei Bedarf (zum Aufbau eines Tropfengrößen-Spektrums) in einer Speichermatrix abgelegt werden.

Die in dem Zähler gebildete Maßzahl läßt sich (in sehr feiner Abstufung) auf die Niederschlagshöhe in Millimetern Wassersäule kalibrieren. Im Rahmen einer nassen Kalibrierung des Sensors kann das korrekte Teiler verhältnis ermittelt werden. Vorzugsweise wird die integrale Niederschlagshöhe in der Auflösung von 1/100 mmWS und 1/5 mmWS am Ausgang 11 zur Verfügung gestellt.

Die komplexe Umsetzung von ΔC-Sprüngen in Tropfenvektoren kann grundsätzlich auch auf anderem Wege ausgeführt werden. Beispielsweise kann die Variation der primären Größe C, bsw. ΔC nach einer Digitalisierung (mit bekannten Methoden) direkt in Mikroprozessoren, insbesondere in sogenannten Signalprozessoren, on-line per Software analysiert werden. Die Anforderungen an die Verarbeitungsgeschwindigkeit sind dabei jedoch sehr hoch. Als bevorzugte Art der Analyse wird daher erfindungsgemäß das sehr effiziente PLL-Verfahren als vorgelagerte Signalauswertung angewendet. Auf diese Weise können die Ergebnisse wesentlich einfacher (langsamer) in beliebige EDV-Systeme übertragen werden.

An dieser Stelle erscheint es notwendig, den Einfluß einer dem erfindungsgemäßen Meßverfahren grundsätzlich anhaftenden Störgröße zu diskutieren: Die einzelnen Regentropfen treffen in unregelmäßiger Folge auf der Meßfläche auf und sie haben sehr unterschiedliche Größen. Als Folge aus diesem stochastische Charakter der einzelnen Primär-Ereignisse (Tropfen) resultiert zunächst eine mathematisch-statistische Unsicherheit in der Bestimmung der Niederschlagsmenge.

Durch Auswertung einer größeren Zahl von Vektoren ist jedoch die statistisch bedingte Schwankung schon nach kurzer Zeit hinreichend klein (Mittelwert-Bildung). Beispielsweise beträgt die noch verbleibende statistische Fehlerbreite bei der Ermittlung von genau einem Millimeter Niederschlag auf einer Meßfläche von nur 10 cm² bereits weniger als 5 % . Sie ist damit auch bei geringen Niederschlagsaktivitäten in einer für die Praxis akzeptablen Größenordnung.

Aus der vorstehenden Darstellung ergibt sich, daß die zu erwartende Genauigkeit des erfindungsgemäßen Regensensors einerseits stark von den Konstruktionsmerkmalen der Meßfläche und andererseits von dem Differenzierungsvermögen der nachfolgenden Signalauswertung abhängt. Anhand eines konkreten Beispiels soll nun aufgezeigt werden, wie bei korrekter Ausgestaltung der erfindungsgemäßen Techniken auch hohe Anforderungen mit vergleichsweise geringem technischen Aufwand erfüllt werden.

Bei dem als Beispiel beschriebenen Meßkopf sind alle genannten Funktionen einschließlich Heizung (Enteisung) und Temperaturregelung kompakt, robust und druckwasserfest in einem Aluminium-Block mit den Abmessungen 60 x 60 x 40 mm untergebracht. An der Ausgangsbuchse des Meßkopfs wird sowohl ein hochauflösendes Signal (1/100 mmWS), als auch ein auf jeweils 0,2 Millimeter Wassersäule normiertes Signal zur Verfügung gestellt. Letzteres ist zu den herkömmlichen Regenmesser-Konstruktionen mit Wippe kompatibel. Die Herstellungskosten der erfindungsgemäßen Konstruktion incl. Enteisung liegen deutlich unter dem Niveau eines Hellmann-Trichters mit Wippe.

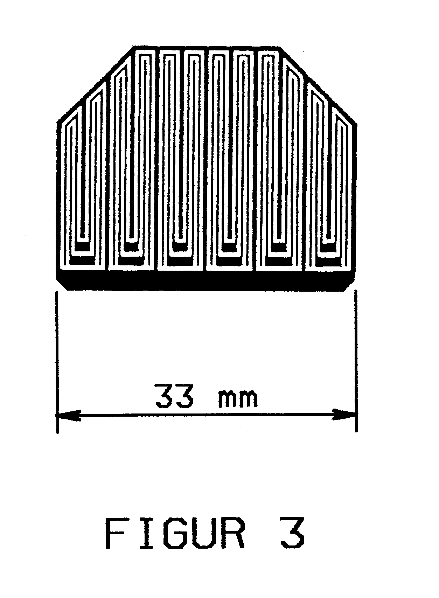

Nachfolgend sollen die wichtigsten Merkmale einer in der Praxis optimierten Bauform beschrieben werden: Als Trägermaterial für die Meßfläche dient bei dem vorliegenden Beispiel eine Aluminiumoxid-Keramik mit 0,6 mm Stärke und 44 mm Kantenlänge. Vorderseitig ist mit Hilfe der Dickschicht-Technologie eine mehrphasige (programmierbare) Leiterbahn-Struktur gemäß Figur 3 aufgebracht. Bei diesem Beispiel ist der Meßkondensator in mehrere, von einander unabhägige Einzelkondensatoren (Zonen) aufgeteilt.

Die in Figur 3 gezeigte Geometrie gestattet es, im Rahmen der späteren Kalibrierung (über rückseitige Stellglieder oder Kontaktbrücken) für jede der sechs Zonen separat festzulegen, ob dort ein enger, ein mittlerer oder eine weiter Elektrodenabstand (Maschenweite) wirksam werden soll.

Der Elektrodenabstand hat einen großen Einfluß auf die Höhe und den Zeitverlauf der ΔC-Sprünge. Die oben erwähnte Nicht-Linearität bei der Umwandlung von ΔC-Sprüngen in Tropfenverktoren wird zu einem wesentlichen Teil durch die korrekte Ausgestaltung und Zusammenführung der sechs unterschiedlichen Zonen kompensiert. Bei korrekter Justierung (Programmierung) der hier beschriebenen Kompensationsmaßnahme muß die Demodulator-Baugruppe 8 nur noch einen Restfehler in Bezug auf die Linearisierung kompensieren.

Von Besonderer Bedeutung sowohl für die Exaktheit als auch für die Langzeitstabilität der Bewertung ist die Oberflächenbeschaffenheit des auf der Meßfläche 2 aufgebrachten Dielektrikums Gute Erfolge werden beispielsweise mit chemisch resistenten Glasüberzügen (Glasuren) erzielt. Geeignete Schichtdicken liegen z.B. in der Größenordnung von 10 bis 100 μm.

Neben der Forderung nach einer möglichst glatten Oberfläche spielt vor allem die Benetzbarkeit eine wichtige Rolle. In der Praxis kann sowohl mit extrem hydrophilen als auch mit extrem hydrophoben Oberflächen gearbeitet werden. Eine mittelmäßige Benetzbarkeit - so wie sie die meisten Materialien von Natur aus aufweisen - liefert keine guten Resultate.

Eine Sensorvariante ist in der Richtung optimiert, daß sich die als Dielektrikum aufgebrannte Glasur sehr leicht und vollständig mit Wasser benetzen läßt, d.h. eine dauerhaft hydrophile Oberfläche aufweist. Sofern eine Glasur diese Eigenschaft nicht schon unmittelbar nach dem Brand zeigt, kann die Hydrophilie auch durch Ätzverfahren oder durch chemisch-reaktive Modifikation der Glasoberfläche (z.B. in Form einer Permutit-Struktur) nachträglich verstärkt werden.

In einer anderen Sensorvariante ist eine stark hydrophobe Oberfläche realisiert. Entsprechende Eigenschaften lassen sich z.B. durch Aufschmelzen dünner Schichten aus Silicon-Polymeren oder durch eine Teflon-Beschichtung erzeugen. Auch eine chemisch-reaktive Modifikation der Glasoberfläche durch Ankoppeln hydrolysestabiler Dimethylsiloxan- oder Octyl-Gruppen liefert brauchbare Ergebnisse.

Als Fazit bleibt festzustellen, daß es sowohl für die hydrophile als auch für die hydrophobe Sensorvariante eine ganze Reihe von praktikablen Alternativen gibt. Je nach Einsatzzweck, Langzeitstabilität oder Kostenrahmen kann das jeweils vorteilhafteste Verfahren ausgewählt werden.

Auf der Rückseite der Meßfläche 2 sind flächendeckend Heizwendel aufgebracht. Ein zugeordneter Pulsbreiten-Regler ermittelt die Ist-Temperatur der Meßfläche 2 und dosiert die Heizleistung stets so, daß bei Frost eine Oberflächentemperatur von + 5 °C gehalten wird. Bei der maximal vorgesehenen Leistungsdichte von 1 Wcm$^{-2}$ ist die Enteisung bis zu Außentemperaturen von - 40 °C wirksam.

Der RC-Oszillator ist eine Standardschaltung. Im vorliegenden Beispiel kann ein integrierter Schaltkreis der CMOS-Reihe (40HC60) mit Erfolg eingesetzt werden. Um den Einfluss von (leitfähiger) Verschmutzung auf der Oberfläche des Meßkondensators so gering wie möglich zu halten, ist eine hohe Arbeitsfrequenz anzustreben; sie liegt hier im Bereich von 1 bis MHz.

Die Funktion des Phasenregelkreises (Figur 1, Baueinheit 8) ist in Figur 4 weiter aufgeschlüsselt. Ein hochintegrierter Standardbaustein (40HC46) enthält einen spannungsgesteuerten Oszillator (VCO) 20 und einen flankengetriggerten Phasenkomparator (PHD) 22. Die Schaltung wird ergänzt durch eine Teilerstufe 21, ein Exclusiv-Oder-Gatter (XOR) 24, einen Tiefpass 25 und einen Schmitt-Trigger (ST) 26.

Der Phasenregelkreis (PLL) arbeitet bei korrekter Dimensionierung des Schleifen-Filters 23 mit einem PI-Verhalten. Am Ausgang 9 werden als Ergebnis Impulsgruppen weitergeleitet, die als Tropfenvektoren au interpretieren sind. Mit dem Phasenregelkreis läßt sich die gewünschte Demodulator-Funktion und die Linearisierung in nahezu idealer Weise (und mit minimalem Bauteilaufwand) realisieren.

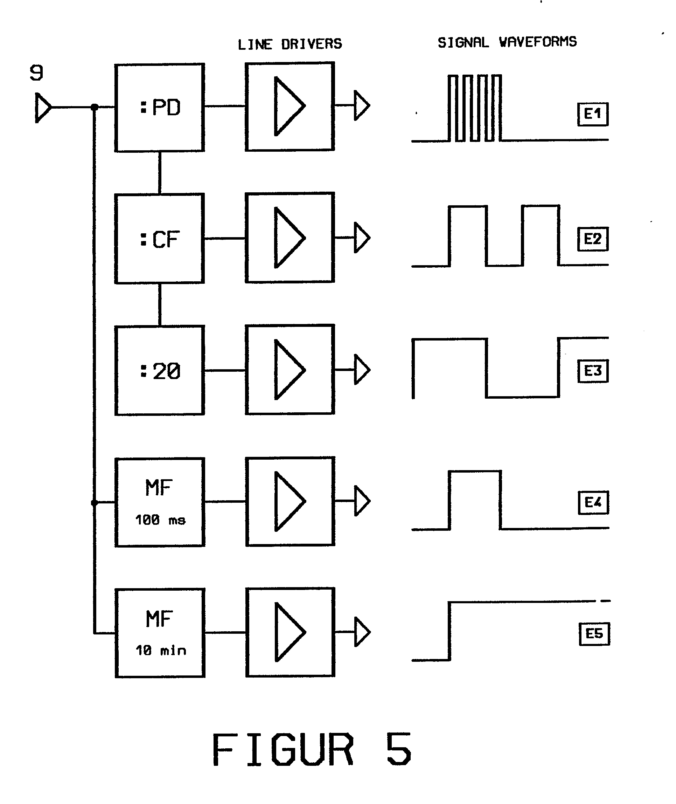

In Figur 5 ist abschließend dargestellt, welche unterschiedlichen Signale durch Weiterverarbeitung (Figur 1, Baueienheit 10) der Tropfenvektoren gewonnen werden. Mit Hilfe des Signals E1 werden die einzelnen Tropfenvolumina als kalibrierte Impulsketten zum Aufbau von Tropfenspektren ausgegeben. Ein positiver Impuls von Signal E2 stellt genau 1/100 mmWS dar, bei Signal E3 sind es jeweils 1/5 mmWS. Mit dem Signal E4 steht einen normierter Zählimpuls von 100 ms für jeden Tropfen - unabhängig von seiner Größe - zur Verfügung. Signal E5 verharrt nach jedem Tropfen genau 10 Minuten lang auf H-Pegel und kann daher als einfache Regenmeldung (Ja/Nein) herangezogen werden.

Es ist in Fachkreisen hinreichend bekannt, daß die Regenmessung bei starkem Wind immer mit einem erheblichen Fehler behaftet ist (aerodynamischer Fehler). Aus diesem Grund werden bei erhöhten Genauigkeitsanforderungen spezielle Vorrichtungen zur Verringerung des Windeinflusses (Windbrecher) angewendet (NOR 87).

Grundsätzlich werden für das erfindungsgemäße Meßverfahren bei Wind ähnliche Störfaktoren gefunden. Auch hier können spezielle Konstruktionen - z.B. in Form von Windleitblechen - um den Sensor herum gruppiert werden, mit dem Ziel, den aerodynamischen Fehler so weit wie möglich zu verringern. Wenn solche Konstruktionen asymmetrisch ausgelegt sind, kann mit einer richtungsspezifischen Wirkung zugleich die (durch Schrägstellung der Meßfläche 2 bedingte) Windrichtungs-Abhängigkeit kompensiert werden.

Eine besonders wirksame Methode zur Vermeidung von Windrichtungs-Fehlern ist auch die gleichzeitige Anwendung von zwei bis vier gleichartigen, jedoch in verschiedene Himmelsrichtungen zeigenden Meßflächen. Die einzelnen Sektoren einer solchen Mehrfach-Anordnung könnten beispielsweise auf jeweils einer (geneigten) Dachfläche eines pyramidenförmigen Grundkörpers angebracht sein (Janus-Kopf).

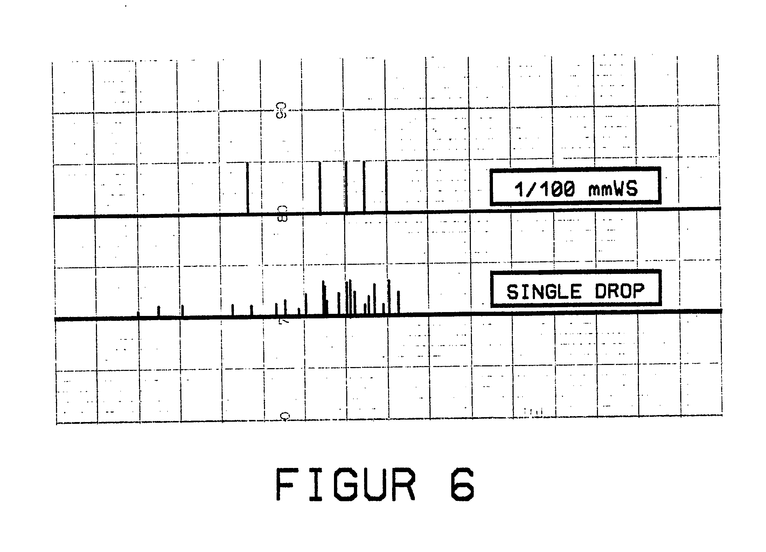

Abschließend soll die Leistungsfähigkeit des beschriebenen Beispiels anhand von charakteristischen Meßprotokollen dokumentiert werden. Figur 6 zeigt das Schreiberprotokoll eines isolierten, relativ kurzfristigen Niederschlagsereignisses. Die Dauer des Ereignisses war auf ca. sieben Minuten beschränkt. Während dieser Zeit wurden 22 einzelne Tropfen detektiert, die insgesamt abgeregnete Wassermenge betrug nur 0,05 mmWS.

Aus diesen Zahlen ergibt sich für das kurzfristige Ereignis eine (hochgerechnete) Niederschlagsaktivität von 0,43 mmWS pro Stunde. Zum Vergleich: Für Trichter-Meßverfahren muß mit einem Benetzungsverlust von ca. 0,26 mmWS pro Ereignis und mit einem Verdunstungsverlust von (durchschnittlich) 0,1 mmWS pro Tag gerechnet werden (KEL 79). Aus den letztgenannten Zahlen läßt sich auch abschätzen, daß ein in der Intensität vergleichbares Regen-ereignis mindestens eine halbe Stunde andauern müßte, bevor eine Tropfer/Wippe-Kombination erstmalig ansprechen kann.

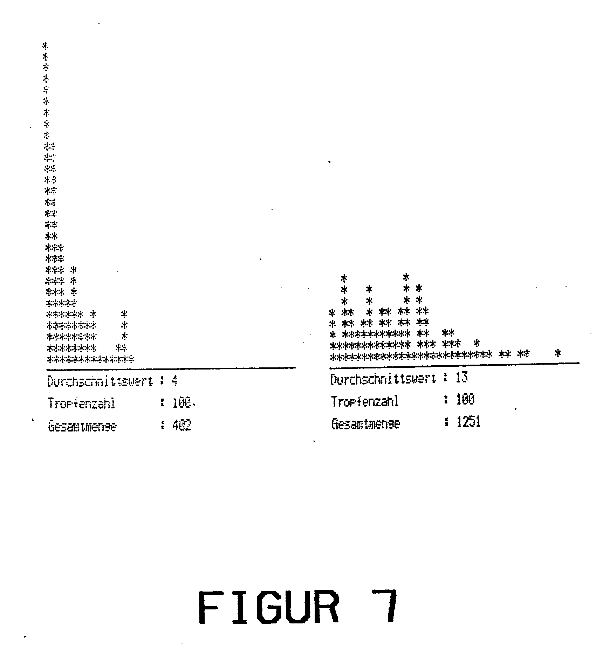

Figur 7 zeigt beispielhaft zwei Tropfengrößen-Verteilungen (Regentropfen-Spektren), die durch on-line-Auswertung der Tropfenvektoren mit Hilfe eines Computers gewonnen wurden. In den gezeigten Grafiken sind jeweils 100 aufeinanderfolgende Tropfen nach ihrem Volumen klassiert. Dabei sind insgesamt 40 Größenklassen dargestellt. Die Klassenbreite beträgt jeweils 0,2 µl. Der hier in der Grafik gezeigte Bereich überdeckt also Tropfenvolumina von 0,2 bis 8 µl.

Links in Figur 7 ist das Spektrum eines feintröpfigen Nieselregens, rechts das Spektrum eines gerade einsetzenden Juni-Schauers (mit mittlerer Tropfengröße) zu sehen. Bei den hier dokumentierten Ereignissen wurden keine Tropfenvolumina oberhalb von 8 µl festgestellt - beim Auftreten größerer Volumina würde die grafische Darstellung automatisch bis auf 100 µl ausgedehnt.

Aus der Fachliteratur (PRU 80) geht hervor, daß mit dem Arbeitsbereich des erfindungsgemäß ausgelegten Beispiels, d.h. von etwa 0,2 bis 100 µl pro Tropfen tatsächlich die in der Praxis dominierenden Tropfenvolumina gut abgedeckt sind. Mit diesem für mitteleuropäische Verhältnisse optimierten Regensensor kann lediglich Nebelnässen am unteren Ende des Spektrums und tropischer Monsunregen am oberen Ende des Spektrums nicht mehr korrekt erfaßt werden. Durch gezielte Anspassung der geometrischen Strukturen in die eine oder in die andere Richtung kann jedoch auch hier bei Bedarf noch Abhilfe geschaffen werden.

LITERATURVERZEICHNIS:

BAE 74 Baer J: Rain Gauge. US-Patentanmeldung 3,943,762 (1974)

BES 87 Best R: Theorie und Anwendungen des Phase-Locked Loop. AT-Verlag, Aarau/Stuttgart (1987)

DIN 58 666 Deutsches Institut für Normung e.V. (Hg.): Meteorologische Geräte, Niederschlags-Auffanggerät, 200 cm² Auffangfläche, Beuth Verlag, Berlin (1966)

DIN 58 667 Deutsches Institut für Normung e.V. (Hg.): Meteorologische Geräte, Niederschlags-Meßgefäß, Beuth Verlag, Berlin (1966)

DER 77 Derman KG, Linden U, Söderberg R: Regenmesser. Deutsche Offenlegungsschrift 26 41 393 (1977)

HAN 86 Hansen DF, Shubert WK: Anordnung und Verfahren zur Beobachtung gegenwärtiger Wettererscheinungen. Internationale Patentanmeldung PCT/US85/00718 und Deutsche Veröffentlichung DE 35 90 723 T1

HEI 82 Heicks R: Meßfühler für die Kontrolle des Benässungsgrades von Oberflüchen. Deutsche Gebrauchsmusteranmeldung G 82 34 131.1

JüL 81 Kernforschungsanlage Jülich GmbH: Regenfühler für einen Regensammler. Deutsche Gebrauchsmusteranmeldung G 81 21 939.3

KAH 72 Kahl G, Guidi GG: (zitiert aus NOR 87, Titel unbekannt), US-Patentanmeldung 3,705,533 (1972)

KEL 79 Keller R (Hg.): Hydrologischer Atlas der Bundesrepublik Deutschland/Textband. Harald Boldt Verlag, Boppart (1979), Seite 48 - 50

NEL 83 Nelson JA: Nonmechanical Digital Raingauge. US-Patentanmeldung 4,520,667 (1983)

NOR 87 Noren: Arrangement in Precipitation Gauges. Internationale Patentanmeldung PCT SE87/00077 (1987)

OEH 87 Oehme F: Was ist ein chemischer Sensor? In: Tagungsband Chemische und Biochemische Sensoren. 3.-4. September 1987, Crest Hotel Friedrichsdorf im Taunus, Schirmherrschaft GDCh - Gesellschaft Deutscher Chemiker (Frankfurt), Verlag ACS Organisations GmbH, D-3050 Wunstorf 2, Seite 9 - 22

PRU 80 Pruppacher HR, Klett JD: Clouds and Precipitation. D.Reidel Publishing Company, Dordrecht/Boston/London (1980), Seite 22 - 27

REI 86 Reichl H: Hybridintegration. Hüthig Verlag, Heidelberg (1986), Seite 95 - 97

SCH 77 Schmitz L: Vorrichtung zur elektrischen Messung von Niederschlägen. Deutsche Patentanmeldung DE 27 20 602 C2 (1977)

TIE 83 Tietze U, Schenck C: Halbleiter-Schaltungstechnik. Springer Verlag, Berlin/Heidelberg/New York/ Tokyo (1983), Seite 817 -829

WAL 85 Walsh JE, Longacre JR: Precipitation Gauge. US-Patentanmeldung 4,538,399 (1985)

ZIE 87 Ziesemer M: Der industrielle Sensor. In: Chemie-Technik, Hüthig Verlag, Heidelberg (1987), 16. Jahrgang/Heft Nr. 2, Seite 46 - 50

**Ansprüche**

1. Elektronischer Sensor als Regenmelder, zur Messung integraler Regenmengen oder zur Ermittlung von einzelnen Tropfenvolumina,
**dadurch gekennzeichnet,**
daß einzelne auf einer Meßfläche 2 auftreffende Tropfen anhand ihrer Prallfläche 3 bewertet werden.

2. Elektronischer Sensor nach Anspruch 1,
**dadurch gekennzeichnet,**
daß die hydrodynamischen Vorgänge beim Aufprall eines Tropfens auf einer Meßfläche 2 ein Primärsignal erzeugen, das kapazitiv abgekoppelt und mit Hilfe einer elektronischen Signalverarbeitung in das zugehörige Tropfenvolumen konvertiert wird.

3. Elektronischer Sensor nach Anspruch 1 oder 2,
**dadurch gekennzeichnet,**
daß die zur Bestimmung der Prallfläche 3 eingesetzte Meßfläche 2 mit Hilfe kammförmig oder spiralförmig ineinandergreifender Leiterstrukturen als Kondensator ausgebildet und daß dieser flächendeckend mit einem (nicht-leitenden) Dielektrikum überzogen ist.

4. Elektronischer Sensor nach einem der Ansprüche 1 bis 3,
**dadurch gekennzeichnet,**
daß zur größenmäßigen Bewertung der einzelnen Tropfen deren Prallfläche 3 primär mit Hilfe eines frequenzmodulierten Signals 7 bestimmt wird.

5. Elektronischer Sensor nach einem der Ansprüche 1 bis 4,
**dadurch gekennzeichnet,**
daß die Meßfläche 2 durch definierte Schrägstellung und in Verbindung mit einer speziellen Oberflächenbehandlung einen ausgeprägten Selbstreinigungseffekt besitzt.

6. Elektronischer Sensor nach einem der Ansprüche 1 bis 5,
**dadurch gekennzeichnet,**
daß die exakte Umsetzung der primären Prallflächen-Bewertung in das gesuchte Tropfenvolumen (Tropfenvektor) durch eine Kombination unterschiedlich gestalteter Teilbereiche (Zonen) auf der Meßfläche 2 geschieht.

7. Elektronischer Sensor nach einem der Ansprüche 1 bis 6,
**dadurch gekennzeichnet,**
daß die Umsetzung der primären Prallflächen-Bewertung in das gesuchte Tropfenvolumen (Tropfenvektor) mit Hilfe eines Phasenregelkreises (Phase-Locked Loop, PLL) geschieht.

8. Elektronischer Sensor nach einem der Ansprüche 1 bis 7,
**dadurch gekennzeichnet,**
daß der aerodynamische Fehler bei der Regenmessung durch ein richtungsspezifisch wirkendes Windleitblech verringert wird.

9. Elektronischer Sensor nach einem der Ansprüch 1 bis 7,
**dadurch gekennzeichnet,**
daß der aerodynamische Fehler bei der Regenmessung durch eine sektorenweise, z.B. pyramidenförmige, gleichzeitig in mehrere Himmelsrichtungen zeigende Meßfläche 2 verringert wird.

RC-OSCILLATOR

PLL

PROG. COUNTER

FIGUR 1

FIGUR 2

EP 0 360 892 A1

33 mm

FIGUR 3

FIGUR 4

EP 0 360 892 A1

FIGUR 5

1/100 mmWS

SINGLE DROP

# FIGUR 6

EP 0 360 892 A1

```
*
*
*
*
*
*
*
*
*
**
**
**
**
**
**
**
**
***
***
***  *
***  *
***  *
*****
******  *      *
*******       *
*******       *
*******      **
*************
```

Durchschnittswert : 4

Trofenzahl        : 100.

Gesamtmenge       : 402

```
           *           *
           *     *     *  *
           *     *     ** *
   *  **   *  ** **  **
   *  **  ** ** ** **
   *  ***********  ** **
   ***************  *** ***  *
   ************************* ** **        *
```

Durchschnittswert : 13

Trofenzahl        : 100

Gesamtmenge       : 1251

# FIGUR 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X,Y | PATENT ABSTRACTS OF JAPAN, Band 9, Nr. 157 (P-369)[1880], 2. Juli 1985; & JP-A-60 33 078 (TATEISHI DENKI K.K.) 20-02-1985 * Zusammenfassung * --- | 1-5,9 | G 01 W    1/14 |
| Y | DE-A-2 031 373  (BEUTTENMÜLLER) * Figuren 1-5; Seite 3, Zeile 17 - Seite 6 * --- | 1,2,4 | |
| Y | FR-A-2 250 122  (SURFACE SYSTEMS INC.) * Figur 1; Seite 3, Zeile 36 - Seite 4, Zeile 31 * --- | 1-3 | |
| Y | FR-A-2 557 369  (PAGNOL ET RATTI) * Figuren 1,3; Ansprüche 1,2,4,6 * --- | 1,5,9 | |
| A | FR-A-1 322 873  (COMMISSARIAT A L'ENERGIE ATOMIQUE) * Figuren; Seite 2, Spalte 2, Zeilen 8-27 * --- | 1,2,3,9 | |
| A,D | DE-U-8 121 939  (KERNFORSCHUNGSANLAGE JÜLICH GmbH) * Figuren; Seite 2, Absatz 3 - Seite 3 * --- | 1-3,5 | RECHERCHIERTE SACHGEBIETE (Int. Cl.3) G 01 W |
| A,D | DE-U-8 234 131  (HEICKS) * Figur; Seiten 2-5 * ----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 12-05-1989 | BATTESON A. |

EPO FORM 1503 03.82 (P0403)